# EUROPÄISCHE PATENTSCHRIFT

(11) **EP 4 032 414 B1**
(45) Veröffentlichungstag und Bekanntmachung des Hinweises auf die Patenterteilung: **23.04.2025**
(21) Anmeldenummer: 22150825.2
(22) Anmeldetag: 11.01.2022
(51) Int. Cl.: A23N 7/00, A23N 4/20, B26D 3/26

(54) **SYSTEM ZUM VERZEHRFERTIGEN AUFBEREITEN EINER ANANASFRUCHT IM STATIONÄREN HANDEL**
SYSTEM FOR THE READY-TO-EAT PREPARATION OF A PINEAPPLE IN A RETAIL OUTLET
SYSTÈME DE PRÉPARATION D'UN FRUIT D'ANANAS PRÊT À ÊTRE CONSOMMÉ DANS LE COMMERCE TRADITIONNEL

(30) Priorität: 20.01.2021 DE 202021100256 U
(43) Veröffentlichungstag der Anmeldung: 27.07.2022
(60) Teilanmeldung: 24212844.5
(73) Patentinhaber: Hepro GmbH, 33378 Rheda-Wiedenbrück (DE)
(72) Erfinder: Protte, Christoph, 33129 Delbrück (DE)
(74) Vertreter: DTS Patent- und Rechtsanwälte PartmbB

(56) Entgegenhaltungen:
- EP-A1- 2 997 835
- EP-A1- 3 623 122
- WO-A1-2014/114960
- WO-A1-2020/055232
- AT-B- 364 478
- CN-A- 111 635 840
- CN-B- 107 692 265
- CN-B- 108 244 662
- GB-A- 2 231 776
- US-A- 3 561 512
- US-A- 4 718 333

## Beschreibung

Die Erfindung betrifft ein System zum Verarbeiten von Lebensmitteln, insbesondere zum verzehrfertigen Aufbereiten einer Ananasfrucht im stationären Handel.

Üblicherweise werden Ananasfrüchte mit einem Messer per Hand geschält oder mit einer speziellen Vorrichtung bzw. mit einem sogenannten Ananasschneider zuhause verarbeitet.

Ein derartiger Ananasschneider ist in der Regel mit einem langgestreckten Hohlzylinder ausgebildet, an dessen Außenseite ein Messer angeordnet ist.

Das Messer ist derart ausgebildet, dass der Ananasschneider in einer Drehbewegung, ähnlich der einer Schraube beim Einschrauben in ein Gewinde, durch die Ananas hindurchgetrieben wird. Dadurch wird das genießbare Fruchtfleisch der Ananasfrucht spiralförmig geschnitten und gleichzeitig, aufgrund der hohlzylindrischen Ausbildung des Ananasschneiders, der ungenießbare Strunk entfernt.

Nachdem nun das genießbare Fruchtfleisch der Ananasfrucht mithilfe des Ananasschneiders von dem ungenießbaren Teil der Ananasfrucht getrennt ist, wird in der Regel das spiralförmig geschnittene Fruchtfleisch in kleinere Portioniereinheiten per Hand zerteilt.

Eine derartige Zubereitung eine Ananasfrucht ist zum einen für Konsumenten zeitaufwendig, mit Mühen beim Zerlegen der Ananasfrucht verbunden und verursacht in der Folge das Abspülen des Ananasschneiders und von Tellern.

Auch sind weitere Vorrichtungen zum verzehrfertigen Aufbereiten eine Ananasfrucht bekannt, bei denen die Ananasfrucht in eine Aufnahmeeinrichtung eingelegt wird und mithilfe eines Antriebs durch eine Schneideinrichtung bewegt wird, um das genießbare Fruchtfleisch vom ungenießbaren Teil zu trennen.

Jedoch erfordern auch diese Vorrichtungen ein gewisses Maß an Zeit und Muskelkraft, und verursachen das Reinigen von diversen Teilen.

Beim Einsatz von stationären Vorrichtungen, etwa im Einzelhandel, kann besonders bei der Verarbeitung von Früchten das Problem auftreten, dass Fruchtfleisch und Saft im Schälraum sowie im Bereich des Ausgabebechers anziehend auf Fluginsekten wirken, vor allem auf Fruchtfliegen. Eine Ansammlung von Insekten wird jedoch als störend empfunden und ist unter hygienischen Gesichtspunkten zu vermeiden.

Aus der EP 3 623 122 A1 ist eine Vorrichtung zum verzehrfertigen Aufbereiten einer Ananasfrucht im stationären Handel bekannt. Die WO 2020/055232 A1 beschreibt eine Vorrichtung zum Verarbeiten von Ananas. Aus der EP 2 997 835 A1 schließlich sind ein Verfahren und eine Vorrichtung zum gefahrlosen Aufbereiten frischer Ananasfrüchte für den Verzehr bekannt.

Aus der AT 364 478 B ist eine Vorrichtung zum Entkernen von Kürbisfrüchten bekannt. Dabei ist vorgesehen, dass die Kürbisse nach dem Einwerfen zerkleinert werden, wobei sich die Kerne vom Fruchtfleisch lösen. Die CN 108 244 662 B betrifft eine Vorrichtung zum Verarbeiten von Longan-Früchten. Dabei ist eine Gebläse vorgesehen, durch das die Schalen weggeblasen und gesammelt werden. Die CN 107 692 265 B schlägt eine Maschine zum Schälen von Melonen vor. Die

GB 2 231 776 A beschreibt eine Maschine zum Entfernen der äußeren Blätter von Kohlköpfen mittels einer Luftdüse. Die WO 2014/114960 A1 beschreibt einen Entsafter mit Kühlschrank für Gemüse und Früchte.

Daher ist es Aufgabe der vorliegenden Erfindung, ein System zum Verarbeiten von Lebensmitteln, insbesondere von Früchten, zum Verzehr und insbesondere zum verzehrfertigen Aufbereiten einer Ananasfrucht im Handel, anzugeben, welches kostengünstig und materialsparend herstellbar ist. Ferner soll das System im stationären Handel zur Verfügung gestellt werden können, wobei bevorzugterweise eine Zubereitung bzw. Zerteilung einer Ananasfrucht automatisiert erfolgt. Insbesondere soll das Auftreten von Fruchtfliegen im Umfeld des Systems vermieden werden.

Diese Aufgabe wird erfindungsgemäß durch die Merkmale des unabhängigen Schutzanspruchs gelöst. Weitere vorteilhafte Weiterbildungen sind Gegenstand der Unteransprüche.

Erfindungsgemäß umfasst bei der vorliegenden Erfindung ein System zum verzehrfertigen Aufbereiten einer Ananasfrucht im stationären Handel:
- ein Gehäuse, das einen Verarbeitungsraum begrenzt;
- eine in dem Verarbeitungsraum angeordnete Vorrichtung zum Verarbeiten der Lebensmittel; und
- einen Ventilator zum Erzeugen eines Luftstroms in dem Verarbeitungsraum, mit den Merkmalen des Anspruchs 1.

Versuche der Erfinder haben überraschend gezeigt, dass der von dem Ventilator im Verarbeitungsraum erzeugte Luftstrom auf Fluginsekte und insbesondere Fruchtfliegen abschreckend wirkt. Diese meiden daher den Aufenthalt in dem Verarbeitungsraum. Auf diese Weise wird vorteilhafterweise eine effiziente und einfache Möglichkeit geschaffen, die Ansammlung von Fruchtfliegen zu vermeiden.

Da keine chemischen Stoffe zum Vertreiben der Insekten eingesetzt werden, bestehen vorteilhafterweise keine Bedenken bei der Verwendung im Umfeld der Verarbeitung von Lebensmitteln. Auch eine Belastung von Mitarbeitern und Kunden mit gesundheitsschädlichen Stoffen wird vermieden.

Der Verarbeitungsraum kann bei der Erfindung beispielsweise ein Volumen umfassen, in welchem die Verarbeitung der Lebensmittel durchgeführt wird. Er kann ferner einen Raum zur Bevorratung von Lebensmitteln, zur Zuführung von Lebensmitteln zur Verarbeitung, zur Ausgabe verarbeiteter Lebensmittel und/oder zur Aufnahme von Abfall bei der Verarbeitung der Lebensmittel umfassen.

Der Verarbeitungsraum kann ferner zumindest teilweise von außen und/oder innen mit Glas verblendet sein.

Das Gehäuse umfasst bevorzugt eine Gehäusewand. Dabei kann die Gehäusewand zumindest einen Lufteinlass aufweisen. Der Lufteinlass kann dabei vorzugsweise als längliche Öffnung ausgebildet sein, insbesondere als horizontaler Schlitz, dessen Breite klein ist gegenüber seiner Länge. Ein solcher länglicher Lufteinlass kann sich etwa über zumindest 50 % einer Länge des Gehäuses erstrecken, insbesondere über 50 % der Länge der Gehäusewand.

Vorzugsweise kann der Ventilator an dem Lufteinlass so angeordnet sein, dass der Luftstrom durch den Lufteinlass verläuft. Dadurch kann ein konstanter Strom von Frischluft zugeführt werden.

Vorzugsweise ist dabei der Ventilator dazu ausgebildet, von außen anzusaugen und in den Verarbeitungsraum hinein zu lenken. Umgekehrt kann der Ventilator dazu eingerichtet sein, Luft aus dem Verarbeitungsraum abzusaugen und auf diese Weise einen Luftstrom zu erzeugen.

Bei einer weiteren Ausbildung kann vorgesehen sein, dass der Ventilator Luft innerhalb des Gehäuses, insbesondere innerhalb des Verarbeitungsraums umwälzt.

Der Ventilator kann etwa an einer Außenseite des Gehäuses oder in dem Verarbeitungsraum angeordnet sein. Dabei umfasst der Ventilator vorzugsweise einen Querstromlüfter umfasst. Vorzugsweise kann der Ventilator ferner einen Niedervolt-Lüfter umfassen.

Beispielsweise ist der Ventilator als Niedervolt-Querstromventilator ausgebildet. Hierdurch kann der Luftstrom vorzugsweise durch einen länglich ausgebildeten Lufteinlass des Gehäuses hindurch erzeugt werden.

Insbesondere wird in einem Bereich um die Vorrichtung in dem Verarbeitungsraum eine vorzugsweise gleichmäßige, langgestreckte Luftströmung über eine große Fläche erzeugt. Dabei ist der Ventilator dazu eingerichtet, eine im Wesentlichen konstante Luftströmung über einen großen Bereich des Verarbeitungsraums zu erzeugen. Dabei erstreckt sich die Luftströmung über einen Bereich von zumindest 60 % des Verarbeitungsraums. Dabei umströmt die Luftströmung die Vorrichtung zum Verarbeiten der Ananas.

Die Luftströmung kann dabei auf verschiedene Weisen ausgebildet sein und sich in verschiedene Richtungen durch den Verarbeitungsraum erstrecken. Beispielsweise kann ein länglich ausgebildeter Verarbeitungsraum entlang einer Längsrichtung oder senkrecht dazu quer zur Längsrichtung durchströmt werden. Die Luftströmung kann ferner von unten nach oben oder umgekehrt verlaufen. Sie kann ferner diagonal durch den Verarbeitungsraum verlaufen.

Es kann vorgesehen sein, dass die Luftströmung im Wesentlichen laminar erzeugt wird; dies kann insbesondere der Fall sein, wenn die Vorrichtung zum Verarbeiten der Lebensmittel nicht in Betrieb ist. Umgekehrt kann vorgesehen sein, dass zumindest in einem Teilbereich des Verarbeitungsraums Luftverwirbelungen erzeugt werden. Ferner kann gezielt ein Teilbereich des Verarbeitungsraums angeströmt werden, etwa durch Ausrichten des Ventilators auf den Teilbereich.

Die Luftströmung beträgt vorzugsweise zumindest 125 m³/h, weiter bevorzugt zumindest 150 m³/h, weiter bevorzugt zumindest 200 m³/h. Diese Stärke des Luftstroms ist beispielsweise für einen Schälraum geeignet, dessen Dimensionen für das Schälen und/oder Verarbeiten einer Ananas eingerichtet sind.

Das System kann zumindest ein Luftleitblech umfassen, das beispielsweise horizontal ausgerichtet ist. Es kann etwa an der Gehäusewand befestigt sein. Das Luftleitblech ist dabei vorzugsweise horizontal einstellbar. Durch horizontales Einstellen des Luftleitblechs kann die Luftströmung vorteilhafterweise optimal in dem Verarbeitungsraum verteilt werden. Ferner kann das Profil des Luftstroms den Bedingungen und den Wünschen angepasst werden. Dabei wird der Luftstrom vorzugsweise durch das Luftleitblech so gelenkt, dass der Luftstrom im Wesentlichen über eine gesamte Breite des Verarbeitungsraums strömt.

Das System kann ferner zumindest ein vertikales Luftleitblech umfassend. Es kann etwa an der Gehäusewand befestigt sein. Es ist vorzugsweise einstellbar ausgebildet ist, insbesondere schwenkbar, etwa um eine vertikale Achse. Dabei kann durch Einstellen des vertikalen Luftleitblechs eine Breite des Luftstroms einstellbar sein.

Ferner kann das System einen Schalter zum An- und Ausschalten des Ventilators umfassen. Der Schalter kann ferner als Eingabeelement zum Einstellen einer Stärke des Luftstroms ausgebildet sein, etwa durch Einstellen der Rotationsfrequenz des Ventilators.

Ferner kann eine "belüftete Rückwand" des Gehäuses vorgesehen sein. Insbesondere umfasst diese eine Gehäusewand mit einer Öffnung zum Einströmen von Luft von außerhalb des Gehäuses. Sie umfasst ferner einen Niedervolt-Querstromventilator, der im Bereich der Öffnung angeordnet ist, Luftleitbleche zum Beeinflussen und Formen des durch die Öffnung strömenden Luftstroms, eine Schutzabdeckung für den Ventilator und einen Schalter.

Die Elemente der belüfteten Rückwand können vorzugsweise als gemeinsame Einheit zur einer Baugruppe vormontiert sein.

Die langen Auslassschlitze in der Rückwand sind bevorzugt in Deckenhöhe des Verarbeitungsraums platziert.

Vorzugsweise ist ferner eine Schutzhaube vorgesehen, die den Ventilator zumindest teilweise umgibt. Diese kann ein Eingreifen in den Ventilator verhindern. Insbesondere kann die Schutzhaube luftdurchlässig ausgebildet sein.

Die in dem Verarbeitungsraum angeordnete Vorrichtung zum Verarbeiten der Lebensmittel kann beispielsweise eine Vorrichtung zum verzehrfertigen Aufbereiten einer Ananasfrucht im stationären Handel sein.

Eine solche Vorrichtung kann insbesondere aufweisen:
- eine Aufnahmeeinrichtung zum Aufnehmen einer Ananasfrucht in der Vorrichtung,
- vorzugsweise einen Antrieb mit einem Mitnehmer zum Bewegen einer aufzubereitenden Ananasfrucht in Förderrichtung von der Aufnahmeeinrichtung zu einer Schneideinrichtung, und
- vorzugsweise eine Schneideinrichtung zum Trennen der Schale und des Strunks von genießbarem Fruchtfleisch der Ananasfrucht.

Bevorzugterweise umfasst die Vorrichtung eine Einrichtung zur Durchmesserbestimmung der Ananasfrucht, um in der Schneideinrichtung Verschnitt in Form von Schale und Strunk zu minimieren und die Ausbeute an Fruchtfleisch zu erhöhen. Auf diese Weise kann also eine Vorrichtung geschaffen werden, mit deren Hilfe ein Optimum an Fruchtfleisch eine Ananasfrucht abgewonnen werden kann, wodurch der Verschnitt reduziert wird. Insbesondere für den stationären Handel ist eine derartige Vorrichtung interessant, da mit ihrer Hilfe Ananasfrüchte in unterschiedlichen Größen mithilfe einer einzigen Vorrichtung verarbeitet werden können. Somit darf es im Vorfeld nur noch einer groben Einteilung von Ananasfrüchten nach Größe, wodurch bei diesem Vorgang kosten einsparbar sind.

Des Weiteren ist es bevorzugt, dass die Einrichtung zur Durchmesserbestimmung der Ananasfrucht ein kraftbeaufschlagtes Gegenhalterelement umfasst, das mit einer entgegen der Förderrichtung wirkenden Kraft beaufschlagt ist. Mithilfe des Gegenhalteelements ist es zudem möglich, eine beispielsweise schräg eingelegte Ananasfrucht in der Vorrichtung derart aufzurichten bzw. zu positionieren, dass die Frucht optimal innerhalb der Vorrichtung verarbeitet werden kann.

Auch kann vorgesehen sein, dass die Einrichtung zur Durchmesserbestimmung der Ananasfrucht eingerichtet ist, aus dem Verfahrweg des Mitnehmers in Förderrichtung und dem Zeitpunkt, an dem die Kraft des kraftbeaufschlagten Gegenhalterelements von der Kraft des Mitnehmers auf die Ananasfrucht übertroffen wird, die Wegdifferenz zwischen Gegenhalterelement und Mitnehmer zu bestimmen. Vorzugsweise entspricht dabei die Wegdifferenz dem Durchmesser der Ananasfrucht. Auf diese Weise ist es also möglich, den Durchmesser einer Ananasfrucht anhand des Abstandes zwischen dem Gegenhalterelement und dem Mitnehmer zu dem Zeitpunkt zu erfassen und zu ermitteln, zu dem die auf das Gegenhalterelement einwirkende Kraft von der Kraft des Mitnehmers auf die Ananasfrucht übertroffen wird.

Günstigerweise umfasst die Einrichtung zur Durchmesserbestimmung der Ananasfrucht ein kraftbeaufschlagtes Gegenhalterelement zur Erzeugung einer Kraft entgegen der Förderrichtung der aufzubereitenden Ananasfrucht sowie einen ersten Sensor zur Positionserfassung des Gegenhalterelements.

Hierbei ist es günstig, wenn das Gegenhalterelement als Schwenkarm ausgebildet ist.

Ferner ist es von Vorteil, wenn der erste Sensor ausgebildet ist, eine vorbestimmte Offenposition und eine vorbestimmte Geschlossenposition des Gegenhalterelements zu detektieren. Somit kann also der erste Sensor zumindest zwei Positionen, eine vorbestimmte Offenposition und eine vorbestimmte Geschlossenposition, des Gegenhalterelements erfassen.

Vorzugsweise ist der erste Sensor als Kontaktschalter oder als kontaktloser Sensor bzw. Schalter ausgebildet. Ein derartig ausgebildeter Sensor kann auf einfache Weise eine vorbestimmte Offenposition (zum Beispiel, wenn der Kontaktschalter nicht kontaktiert wird) und eine vorbestimmte Geschlossenposition (zum Beispiel, wenn der Kontaktschalter kontaktiert wird) erfassen. Selbstverständlich ist auch eine umgekehrte Ausbildung möglich (siehe nachfolgend). Bei einem kontaktlosen Sensor bzw. Schalter handelt es sich vorzugsweise um einen Sensor mit induktiver Erkennung bzw. mit Induktionserkennung.

Bevorzugterweise ist die Vorrichtung derart ausgebildet, dass ein Kontaktsignal des ersten Sensors die vorbestimmte Offenposition und ein fehlendes Kontaktsignal die vorbestimmte Geschlossenposition des Gegenhalterelements signalisiert.

Des Weiteren ist es günstig, wenn in einer Offenposition das Gegenhalterelement derart ausgerichtet ist, dass der Verfahrweg einer Ananasfrucht in Förderrichtung vom Gegenhalterelement freigegeben ist.

Vorzugsweise ist in der Offenposition das Gegenhalterelement entlang der Förderrichtung der aufzubereitenden Ananasfrucht ausgerichtet, um eine Krafteinwirkung auf die aufzubereitende Ananasfrucht zu unterbinden, sodass die Ananasfrucht in Förderrichtung durch den Mitnehmer zur Schneideinrichtung verfahrbar ist.

Vorteilhafterweise ist in einer Geschlossenposition das Gegenhalterelement derart orientiert, dass der Verfahrweg einer Ananasfrucht in Förderrichtung vom Gegenhalterelement versperrt ist.

Hierbei ist es günstig, wenn in der Geschlossenposition das Gegenhalterelement quer zur Förderrichtung der aufzubereitenden Ananasfrucht ausgerichtet ist, um eine maximale Kraft entgegen der Förderrichtung der aufzubereitenden Ananasfrucht zu erzeugen.

Günstigerweise umfasst die Einrichtung zur Durchmesserbestimmung der Ananasfrucht eine Hebelanordnung und ein Federkraftelement.

Hierbei kann vorgesehen sein, dass die Hebelanordnung und das Gegenhalterelement um eine gemeinsame Schwenkachse schwenkbar ausgebildet sind.

Vorteilhafterweise ist das Federkraftelement an der Hebelanordnung angeordnet, um über die Schwenkachse das Gegenhalterelement mit einer bestimmten Kraft zum Gegenhalten und entgegen der Förderrichtung der aufzubereitenden Ananasfrucht zu beaufschlagen.

Auch ist es günstig, wenn die Hebelanordnung eingerichtet ist, das Gegenhalterelement von der Geschlossenposition in die Offenposition zu führen und dort zu halten, sobald die Kraft, die vom Mitnehmer über die aufzubereitende Ananasfrucht auf das Gegenhalterelement einwirkt, die Kraft des Federkraftelements übertrifft. Mit anderen Worten ausgedrückt ist es also günstig, wenn die Hebelanordnung selbsthemmend bezüglich der Positionen des Gegenhalterelements ausgebildet ist. Unter selbsthemmend ist in Zusammenhang zu verstehen, dass nur unter Krafteinwirkung auf das Gegenhalterelement dieses von der Geschlossenposition in die Offenposition oder umgekehrt überführt werden kann.

Ferner kann vorgesehen sein, dass die Einrichtung zur Durchmesserbestimmung der Ananasfrucht einen Rückstellmechanismus zum Rückstellen des Gegenhalterelements aus der Offenposition in die Geschlossenposition umfasst.

Vorzugsweise ist der Rückstellmechanismus mit der Hebelanordnung verbunden, um das kraftbeaufschlagte Gegenhalterelement von der Offenposition in die Geschlossenposition zurückzustellen, wodurch eine erneute Durchmesserbestimmung einer Ananasfrucht gewährleistbar ist.

Auch ist es von Vorteil, wenn der Rückstellmechanismus ein drehgelagertes Anschlagelement und ein Verbindungselement umfasst, das das Anschlagelement mit der Hebelanordnung verbindet.

Günstigerweise sind die Drehachse des Anschlagelements und die Schwenkachse des Gegenhalterelements gleichorientiert, d.h. vorzugsweise in die gleiche Raumrichtung orientiert.

Bevorzugterweise verbindet das Verbindungselement das Anschlagelement und das Gegenhalterelement derart miteinander, dass eine Drehung des einen Elements gleichzeitig eine Drehung des anderen Elements in dieselbe Richtung bewirkt.

Auch ist es günstig, wenn das Verbindungselement derart das Anschlagelement mit der Hebelanordnung verbindet, dass durch Rückfahren des Mitnehmers entgegen der Förderrichtung und gegen das Anschlagelement das Gegenhalterelement von der Offenposition in die Geschlossenposition rückstellbar ist. Somit ist die Vorrichtung zum verzehrfertigen Aufbereiten einer Ananasfrucht bereit, eine weitere Ananasfrucht zu verarbeiten.

Auch kann vorgesehen sein, dass die Einrichtung zur Durchmesserbestimmung der Ananasfrucht einen zweiten Sensor zur Positionserfassung des Mitnehmers umfasst.

Vorteilhafterweise ist der zweite Sensor ausgebildet, den Weg, den der Mitnehmer des Antriebs zurückgelegt, und somit die Position des Mitnehmers zu erfassen.

Vorzugsweise ist der zweite Sensor am Antrieb angeordnet. Mithilfe einer derartigen Anordnung ist es dem zweiten Sensor auf einfache Weise möglich, zum Beispiel die Bewegung einer Motorwelle zu erfassen und somit die Bewegung bzw. den zurückgelegten Weg eines an der Welle bzw. an dem Antrieb angeordneten Mitnehmers zu erfassen.

Auch ist es günstig, wenn der zweite Sensor die relative Position des Mitnehmers zu einer vorbestimmten Startposition erfasst.

Vorteilhafterweise ist die Einrichtung zur Durchmesserbestimmung der Ananasfrucht derart eingerichtet, dass der Mitnehmer in der vorbestimmten Startposition angeordnet ist, wenn das Gegenhalterelement in der Geschlossenposition angeordnet ist.

Bevorzugterweise ist die Einrichtung zur Durchmesserbestimmung der Ananasfrucht derart eingerichtet, dass der Mitnehmer in der vorbestimmten Startposition angeordnet ist, wenn der erste Sensor eine vorbestimmte Geschlossenposition des Gegenhalterelements detektiert.

Vorzugsweise ist die Einrichtung zur Durchmesserbestimmung der Ananasfrucht derart eingerichtet, dass der Mitnehmer in der vorbestimmten Startposition angeordnet ist, wenn der Mitnehmer gegen das Anschlagelement eines Rückstellmechanismus wirkt und das Gegenhalterelement von der Offenposition in die Geschlossenposition rückgestellt ist. Somit ist es also der Einrichtung zur Durchmesserbestimmung möglich, auf einfache Weise eine vorbestimmte Startposition zu erkennen, von der aus eine Wegerfassung des Mitnehmers möglich ist.

Auch ist es bevorzugt, dass die Einrichtung zur Durchmesserbestimmung der Ananasfrucht eine Bestimmungseinheit zum Bestimmen des Durchmessers der Ananasfrucht umfasst.

Vorteilhafterweise ist die Bestimmungseinheit zum Bestimmen des Durchmessers der Ananasfrucht mit dem ersten und dem zweiten Sensor verbunden.

Auch ist es von Vorteil, wenn die Bestimmungseinheit zum Bestimmen des Durchmessers der Ananasfrucht eingerichtet ist, den in Förderrichtung zurückgelegten Weg des Mitnehmers ausgehend von einer vorbestimmten Startposition zu erfassen.

Günstigerweise ist die Bestimmungseinheit zum Bestimmen des Durchmessers der Ananasfrucht eingerichtet, die vorbestimmte Entfernung in Förderrichtung zwischen dem Gegenhalterelement und der vorbestimmten Startposition des Mitnehmers zu speichern.

Bevorzugterweise ist die Bestimmungseinheit eingerichtet, aus dem Verfahrweg des Mitnehmers in Förderrichtung, der von dem zweiten Sensor erfasst wird, und dem Zeitpunkt, der von dem ersten Sensor erfasst wird und zu welchem die entgegen der Förderrichtung wirkenden Kraft des kraftbeaufschlagten Gegenhalterelements vom Mitnehmer übertroffen wird, den seit der Startposition zurückgelegten Weg des Mitnehmers zu bestimmen. Dadurch ist es zum Beispiel möglich, mithilfe einer Differenzbildung des Weges bzw. der Strecke zwischen gegen Halterelement und Startposition des Mitnehmers und der relativen Position zwischen Mitnehmer und Startposition zum Zeitpunkt des Auslösens des ersten Sensors (wenn die entgegen der Förderrichtung wirkenden Kraft des kraftbeaufschlagten Gegenhalterelements vom Mitnehmer übertroffen wird) den Durchmesser der Ananasfrucht zu bestimmen.

Ferner ist es möglich, dass die Bestimmungseinheit eingerichtet ist, aus dem zurückgelegten Weg des Mitnehmers und dem Zeitpunkt, an dem der erste Sensor eine vorbestimmte Offenposition des Gegenhalterelements detektiert, die Wegdifferenz zwischen Gegenhalterelement und Mitnehmer zu bestimmen, wobei vorzugsweise die Wegdifferenz dem Durchmesser der Ananasfrucht entspricht.

Vorteilhafterweise ist die Bestimmungseinheit eingerichtet, die Wegdifferenz aus dem zurückgelegten Weg des Mitnehmers und der gespeicherten, vorbestimmten Entfernung des Gegenhalterelements zur Startposition des Mitnehmers zu bestimmen.

Ferner ist es günstig, wenn die Einrichtung zur Durchmesserbestimmung der Ananasfrucht eine Steuereinheit zur Bewegungssteuerung des Antriebs umfasst.

Günstigerweise ist die Steuereinheit im Zusammenwirken mit einer Bestimmungseinheit der Einrichtung zur Durchmesserbestimmung der Ananasfrucht eingerichtet, den Antrieb so anzusteuern, dass die Ananasfrucht anhand des errechneten Durchmessers der Ananasfrucht in der Schneideinrichtung derart platzierbar ist, dass Verschnitt in Form von Schale und Strunk minimierbar und die Ausbeute an Fruchtfleisch maximierbar ist.

Auch ist es günstig, wenn die Steuereinheit ausgebildet ist, die Mitnehmer nach der Platzierung der Ananasfrucht in der Schneideinrichtung entgegen der Förderrichtung zu verfahren. Dadurch kann sichergestellt werden, dass die Schneideinrichtung den Mitnehmer während der Verarbeitung der Ananasfrucht nicht beschädigt.

Vorzugsweise ist die Steuereinheit eingerichtet, den Antrieb zu deaktivieren, insbesondere sobald die Geschlossenposition des Gegenhalterelements vom ersten Sensor detektiert wird.

Auch ist es von Vorteil, wenn die Schneideinrichtung eine Trenneinheit zum Trennen der Schale und des Strunks von genießbarem Fruchtfleisch der Ananasfrucht umfasst.

Vorteilhafterweise ist die Trenneinheit so ausgebildet, dass diese ein hohlzylinderförmiges Zwischenprodukt aus genießbarem Fruchtfleisch erstellt.

Des Weiteren kann vorgesehen sein, dass die Trenneinheit ein hubbewegbares Schäl-Entkernmesser umfasst, das eingerichtet ist, den Strunk einer Ananasfrucht zu entfernen sowie die Ananasfrucht zu schälen und ein hohlzylinderförmiges Zwischenprodukt aus genießbarem Fruchtfleisch zu erstellen.

Vorzugsweise umfasst die Trenneinheit einen elektrischen Hubantrieb, an dem das Schäl-Entkernmesser angeordnet und mit dem das Schäl-Entkernmesser hubbewegbar ist. In diesem Zusammenhang wird unter hubbewegbar verstanden, dass das Schäl-Entkernmesser in vertikaler Richtung bzw. auf und ab bewegbar ausgebildet ist.

Günstigerweise ist das Schäl-Entkernmesser von dem Hubantrieb in eine Trennrichtung bewegbar und zum Freigeben des genießbaren Fruchtfleisches entgegen der Trennrichtung bewegbar.

Auch ist es günstig, wenn das Schäl-Entkernmesser zwei konzentrisch angeordnete Schneidelemente umfasst. Somit ist es möglich, ein hohlzylinderförmiges Zwischenprodukt aus genießbarem Fruchtfleisch zu erstellen.

Vorteilhafterweise sind die Schneidelemente auf die Größe der Ananasfrucht angepasst.

Auch ist es von Vorteil, wenn die Schneideinrichtung eine Portioniereinheit zum verzehrfertigen Portionieren von genießbarem Fruchtfleisch umfasst.

Günstigerweise ist die Portioniereinheit eingerichtet, ein hohlzylinderförmiges Zwischenprodukt, erstellt von einer Trenneinheit, durch Schneiden zu portionieren. Mithilfe der Portioniereinheit ist es möglich, ein hohlzylinderförmiges Zwischenprodukt derart zu portionieren, dass das genießbare Fruchtfleisch einfach mit einer Gabel konsumiert werden kann.

Des Weiteren ist es günstig, wenn die Portioniereinheit als eine Querschneideeinheit zum Schneiden von Scheiben und/oder als eine Längsschneideeinheit zum Schneiden von Stangen und/oder Stücken ausgebildet ist.

Vorteilhafterweise ist es auch vorgesehen, die Querschneideeinheit der Portioniereinheit derart auszubilden, dass diese nur bei Bedarf verfügbar ist. So ist es also möglich, auch nur Stangen mittels der Längsschneideeinheit zu produzieren. Gleiches gilt günstigerweise für die Längsschneideeinheit der Portioniereinheit, sodass diese vorzugsweise auch nur bei Bedarf verfügbar ist, um nur Scheiben mittels der Querschneideeinheit zu produzieren. Wie angedeutet, ist es auch möglich, dass sowohl die Querschneideeinheit als auch die Längsschneideeinheit zum Einsatz kommen.

Vorzugsweise umfasst die Portioniereinheit ein horizontales Messerpaket zum Schneiden von Scheiben und/oder ein vertikales Messerpaket zum Schneiden von Stangen und/oder Stücken.

Auch ist es von Vorteil, wenn die Querschneideeinheit ein horizontales Messerpaket mit mindestens zwei horizontal übereinander angeordneten Schneidmesserelementen umfasst.

Vorteilhafterweise sind die mindestens zwei horizontal übereinander angeordneten Schneidmesserelemente miteinander verbunden. Mithilfe der horizontal übereinander angeordneten Schneidmesserelemente ist es möglich, aus einem hohlzylinderförmigen Zwischenprodukt kreisringförmige Scheiben zu schneiden.

Auch ist es günstig, wenn die Längsschneideeinheit ein vertikales Messerpaket mit mindestens zwei nebeneinander angeordneten Schneidmesserelementen umfasst.

Vorteilhafterweise sind die mindestens zwei nebeneinander angeordneten Schneidmesserelemente miteinander verbunden.

Ferner kann vorgesehen sein, dass die Portioniereinheit eine hubbewegbare Stempeleinheit umfasst.

Bevorzugterweise sind die mindestens zwei nebeneinander angeordneten Schneidmesserelemente der Längsschneideeinheit sternförmig mit der hubbewegbaren Stempeleinheit verbunden.

Auch ist es bevorzugt, dass die hubbewegbare Stempeleinheit ein Zylinderelement umfasst, an welchem ein vertikales Messerpaket befestigt ist.

Günstigerweise umfasst das Zylinderelement einen Durchmesser, der an den Innendurchmesser eines hohlzylinderförmigen Zwischenprodukts, erstellt von einer Trenneinheit, angepasst ist, sodass das Zylinderelement in den Innendurchmesser des Zwischenprodukts versenkbar ist.

Des Weiteren ist es günstig, wenn die sternförmig angeordneten Schneidmesserelemente in radialer Richtung, ausgehend von dem Zylinderelement, eine radiale Länge aufweisen, die den Außendurchmesser eines hohlzylinderförmigen Zwischenprodukts, erstellt von einer Trenneinheit, übertreffen. Somit kann ein sicheres Zerteilen des hohlzylinderförmigen Zwischenprodukts sichergestellt werden.

Ferner kann vorgesehen sein, dass die Portioniereinheit einen elektrischen Hubantrieb umfasst, wodurch die Längsschneideeinheit hubbewegbar ist.

Vorzugsweise ist die Längsschneideeinheit von dem Hubantrieb zum Schneiden in eine Trennrichtung bewegbar und entgegen der Trennrichtung bewegbar. Günstigerweise sind der elektrische Hubantrieb der Portioniereinheit und der elektrische Hubantrieb der Trenneinheit zusammen als gemeinsamer Hubantrieb ausgebildet.

Des Weiteren ist es günstig, wenn die Schneideinrichtung eine Schwenkbodeneinheit zum Freigeben einer aufbereiteten und verzehrfertig portionierten Ananasfrucht umfasst. Auf diese Weise kann die aufbereitete und verzehrfertig portionierte Ananasfrucht aus der Vorrichtung entlassen und einem Käufer der Ananasfrucht zugeführt werden.

Hierbei ist es ferner günstig, wenn die Schwenkbodeneinheit ein Betätigungselement, ein Bodenelement, das eine Fallöffnung freigibt oder verschließt, und ein Federelement umfasst, die miteinander wirkverbunden sind.

Vorzugsweise ist das Bodenelement von dem Federelement in eine erste Position, in der die Fallöffnung freigegeben ist, vorgespannt.

Auch ist es von Vorteil, wenn der Mitnehmer zum Führen einer Ananasfrucht eingerichtet ist, gegen das Betätigungselement zu wirken, wodurch das Bodenelement entgegen der Spannkraft des Federelements in eine zweite Position, in der die Fallöffnung verschlossen ist, bewegbar ist.

Vorteilhafterweise umfasst das Bodenelement einen Schneidboden mit Kerben, die an die Anordnung der Schneidelemente der Längsschneideeinheit angepasst sind. Dies stellt sicher, dass die Schneidelemente ihre maximale Schärfe beibehalten.

Des Weiteren ist die Schneideinrichtung vorteilhafterweise ausgebildet, mittels eines Top-Tail-Messers die Enden der aufzubereitenden Ananasfrucht in Form von endseitigen Kappen abzutrennen.

Vorzugsweise sind die Aufnahmeeinrichtung und/oder die Schneideinrichtung und/oder die Einrichtung zur Durchmesserbestimmung der Ananasfrucht entlang einer Kreisbahn ausgerichtet sind.

Auch ist es von Vorteil, wenn die Aufnahmeeinrichtung und/oder die Schneideinrichtung und/oder die Einrichtung zur Durchmesserbestimmung der Ananasfrucht entlang einer Fruchtauflage angeordnet sind.

Vorteilhafterweise ist die Fruchtauflage derart ausgebildet, dass die Ananasfrucht in Förderrichtung gesehen nach der Einrichtung zur Durchmesserbestimmung der Ananasfrucht bis zum Ende der Schneideinrichtung auf einer Ebene, insbesondere auf einer einzigen Ebene, bewegt wird.

Des Weiteren ist es günstig, wenn die Vorrichtung ein Gehäuse umfasst, das einem Konsumenten bzw. einem Käufer von Fruchtfleisch einer Ananas im stationären Handel das Einlegen und das Entnehmen der Ananasfrucht erlaubt. Somit kann von einem Konsumenten bzw. einem Käufer von außen kein Zugriff erfolgen, wodurch Verletzungen durch die automatisierte Vorrichtung verhinderbar sind.

Nachstehend wird die Erfindung anhand eines Ausführungsbeispiels in Verbindung mit zugehörigen Zeichnungen näher erläutert. Hierbei zeigen schematisch:
- **Fig. 1**: eine 3-dimensionale Draufsicht auf eine vereinfacht dargestellte Vorrichtung zum verzehrfertigen Aufbereiten einer Ananasfrucht im stationären Handel;
- **Fig. 2**: eine weitere 3-dimensionale Ansicht der Vorrichtung aus Fig. 1;
- **Fig. 3**: eine 3-dimensionale Untenansicht auf die erfindungsgemäße Vorrichtung aus Figuren 1 und 2;
- **Fig. 4**: eine weitere 3-dimensionale Ansicht der Vorrichtung aus Fig. 1;
- **Fig. 5**: eine schematische Ansicht des erfindungsgemäßen Systems; und
- **Fig. 6**: eine Explosionszeichnung einer belüfteten Rückwand des Systems.

In der nachfolgenden Beschreibung werden gleiche Bezugszeichen für gleiche Gegenstände verwendet.

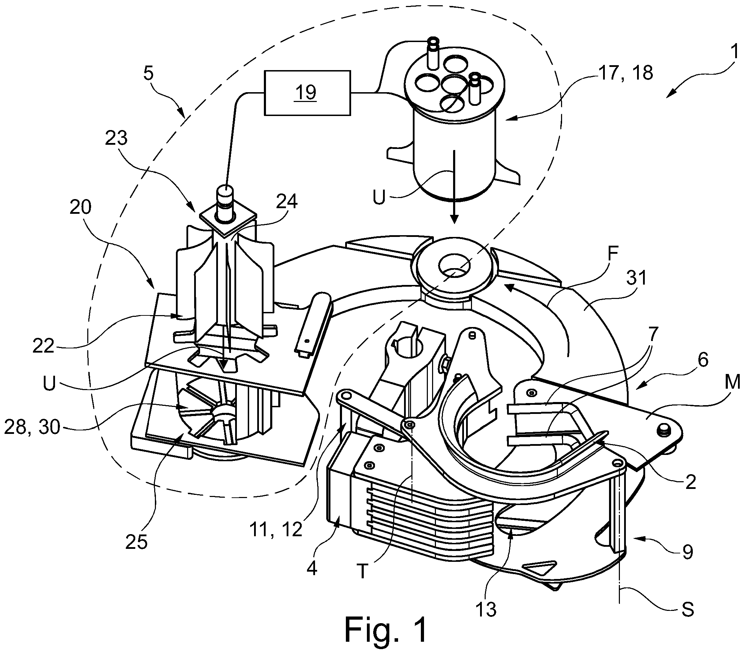

Figur 1 zeigt eine 3-dimensionale Draufsicht auf eine vereinfacht dargestellte Vorrichtung 1 zum verzehrfertigen Aufbereiten einer Ananasfrucht A im stationären Handel.

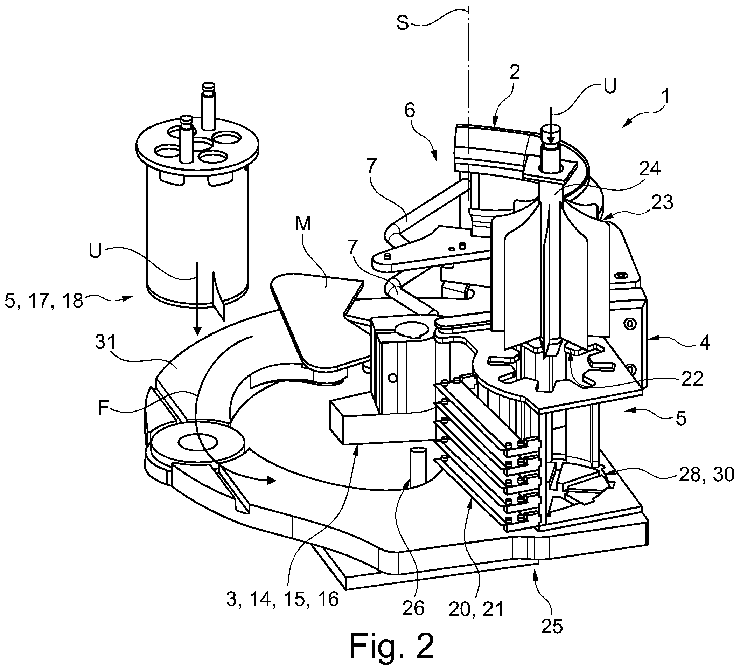

Figuren 2 bis 4 zeigen weitere 3-dimensionale Ansichten der Vorrichtung 1 aus Figur 1.

Der Einfachheit halber und Kürze wegen werden nachfolgend die Figuren 1 bis 4 gemeinsam beschrieben, wobei - wenn notwendig - auf einzelne Figuren gesondert hingewiesen wird.

Genauer dargestellt zeigen Figuren 1 bis 4 eine Vorrichtung 1 zum verzehrfertigen Aufbereiten einer Ananasfrucht A im stationären Handel.

Hierbei hat die Vorrichtung 1 eine Aufnahmeeinrichtung 2 zum Aufnehmen einer Ananasfrucht A in der Vorrichtung 1, einen Antrieb 3 mit einem Mitnehmer 4 zum Bewegen einer aufzubereitenden Ananasfrucht A in Förderrichtung F von der Aufnahmeeinrichtung 2 zu einer Schneideinrichtung 5, und eine Schneideinrichtung 5 zum Trennen der Schale und des Strunks von genießbarem Fruchtfleisch der Ananasfrucht A.

Des Weiteren umfasst die Vorrichtung 1 eine Einrichtung 6 zur Durchmesserbestimmung der Ananasfrucht A, um in der Schneideinrichtung 5 Verschnitt in Form von Schale und Strunk zu minimieren und die Ausbeute an Fruchtfleisch zu erhöhen.

Die Einrichtung 6 zur Durchmesserbestimmung der Ananasfrucht A hat zwei kraftbeaufschlagte Gegenhalterelemente 7, die als Schwenkarme ausgebildet und mit einer entgegen der Förderrichtung F wirkenden Kraft beaufschlagt sind. Diese Gegenhalterelemente 7 dienen unter anderem auch dazu, beispielsweise eine schräg eingelegte Ananasfrucht A in der Vorrichtung 1 derart aufzurichten bzw. zu positionieren, dass die Frucht optimal innerhalb der Vorrichtung 1 verarbeitet werden kann.

Die Einrichtung 6 zur Durchmesserbestimmung der Ananasfrucht A ist eingerichtet, aus dem Verfahrweg des Mitnehmers 4 in Förderrichtung F und dem Zeitpunkt, an dem die Kraft der kraftbeaufschlagten Gegenhalterelemente 7 von der Kraft des Mitnehmers 4 auf die Ananasfrucht A übertroffen wird, die Wegdifferenz zwischen Gegenhalterelement 7 und Mitnehmer 4 zu bestimmen. Denn die Wegdifferenz entspricht dem Durchmesser der Ananasfrucht A.

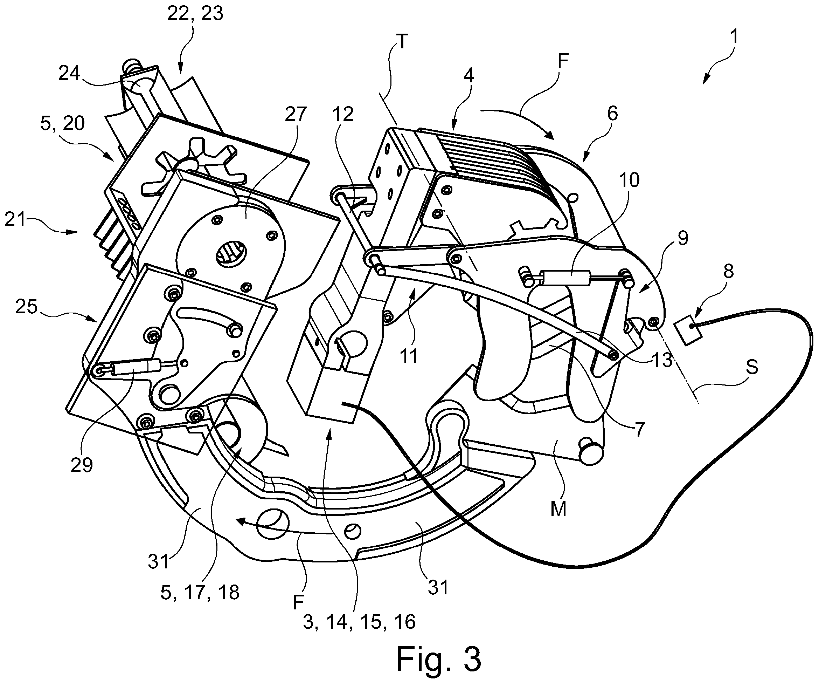

Wie in Figur 3 gezeigt, hat die Einrichtung 6 zur Durchmesserbestimmung der Ananasfrucht A einen ersten Sensor 8 zur Positionserfassung der Gegenhalterelemente 7.

Dabei ist der erste Sensor 8 als Kontaktschalter realisiert und ausgebildet, eine vorbestimmte Offenposition und eine vorbestimmte Geschlossenposition der Gegenhalterelemente 7 zu detektieren.

Genauer geschildert ist die Vorrichtung 1 mit dem ersten Sensor 8 derart ausgebildet, dass ein Kontaktsignal des ersten Sensors 8 die vorbestimmte Offenposition und ein fehlendes Kontaktsignal die vorbestimmte Geschlossenposition der Gegenhalterelemente 7 signalisiert.

In einer Offenposition (in keiner der Figuren 1 bis 4 gezeigt) sind die Gegenhalterelemente 7 derart ausgerichtet, dass der Verfahrweg einer Ananasfrucht A in Förderrichtung F von den Gegenhalterelementen 7 freigegeben ist, wobei in der Offenposition die Gegenhalterelemente 7 entlang der Förderrichtung F der aufzubereitenden Ananasfrucht A ausgerichtet sind. Dadurch kann eine Krafteinwirkung auf die aufzubereitende Ananasfrucht A unterbunden werden, sodass die Ananasfrucht A ungehindert von den Gegenhalterelementen 7 in Förderrichtung F durch den Mitnehmer 4 zur Schneideinrichtung 5 verfahrbar ist.

Wie in den Figuren 1 bis 4 dargestellt, sind in einer Geschlossenposition die Gegenhalterelemente 7 hingegen derart orientiert, dass der Verfahrweg einer Ananasfrucht A in Förderrichtung F von den Gegenhalterelementen 7 versperrt ist.

Dabei sind die Gegenhalterelemente 7 in der Geschlossenposition quer zur Förderrichtung F der aufzubereitenden Ananasfrucht A ausgerichtet, um eine maximale Kraft entgegen der Förderrichtung F der aufzubereitenden Ananasfrucht A zu erzeugen.

Wie insbesondere Figur 3 zeigt, hat die Einrichtung 6 zur Durchmesserbestimmung der Ananasfrucht A eine Hebelanordnung 9 und ein Federkraftelement 10, wobei die Hebelanordnung 9 und die Gegenhalterelemente 7 um eine gemeinsame Schwenkachse S schwenkbar sind.

Die Hebelanordnung 9 hat dabei ein Schwenkteil, an dem die Gegenhalteelemente 7 angeordnet sind, ein dreieckförmiges Verbindungsteil, an dem das Federkraftelement 10, ein Verbindungselement 13 und ein Formteil zur Verbindung des Verbindungsteils mit dem Schwenkteil.

Das Federkraftelement 10 ist dabei an der Hebelanordnung 9 angeordnet, um über die Schwenkachse S die Gegenhalterelemente 7 mit einer bestimmten Kraft zum Gegenhalten und entgegen der Förderrichtung F der aufzubereitenden Ananasfrucht A zu beaufschlagen.

Die Hebelanordnung 9 ist - wie in Figur 3 zu erkennen - eingerichtet, die Gegenhalterelemente 7 von der Geschlossenposition in die Offenposition zu führen und dort zu halten, sobald die Kraft, die vom Mitnehmer 4 über die aufzubereitende Ananasfrucht A auf die Gegenhalterelemente 7 einwirkt, die Kraft des Federkraftelements 10 übertrifft.

In der Offenposition ist das dreieckförmige Verbindungsteil der Hebelanordnung 9 derart um das Schwenkteil, an dem die Gegenhalteelemente 7 angeordnet sind, verschwenkt bzw. derart um die Schwenkachse S verschwenkt, dass das dreieckförmige Verbindungsteil den als Kontaktschalter ausgebildeten ersten Sensor 8 kontaktiert.

Ferner zeigt insbesondere Figur 3, dass die Einrichtung 6 zur Durchmesserbestimmung der Ananasfrucht A einen Rückstellmechanismus 11 zum Rückstellen der Gegenhalterelemente 7 aus der Offenposition in die Geschlossenposition hat.

Hierbei ist der Rückstellmechanismus 11 mit der Hebelanordnung 9 verbunden, um die kraftbeaufschlagten Gegenhalterelemente 7 von der Offenposition in die Geschlossenposition zurückzustellen, wodurch eine erneute Durchmesserbestimmung einer Ananasfrucht A gewährleistbar ist.

Wie ferner Figur 3 zu entnehmen, hat der Rückstellmechanismus 11 ein drehgelagertes Anschlagelement 12 (schwingenartig an zwei Auslegern um die Drehachse T befestigt) und ein Verbindungselement 13 (in Form eines gebogenen Blechstücks), das das Anschlagelement 12 mit der Hebelanordnung 9 verbindet.

Die Drehachse T des Anschlagelements 12 und die Schwenkachse S der Gegenhalterelemente 7 sind gleichorientiert bzw. in die gleiche Raumrichtung orientiert, wobei das Verbindungselement 13 das Anschlagelement 12 und die Gegenhalterelemente 7 miteinander verbindet.

Das Anschlagelement 12 und die Gegenhalterelemente 7 sind des Weiteren so ausgebildet, dass eine Drehung des einen Elements gleichzeitig eine Drehung des anderen Elements in dieselbe Richtung bewirkt.

Auch verbindet das Verbindungselement 13 derart das Anschlagelement 12 mit der Hebelanordnung 9, dass durch Rückfahren des Mitnehmers 4 entgegen der Förderrichtung F und gegen das Anschlagelement 12 die Gegenhalterelemente 7 von der Offenposition in die Geschlossenposition rückstellbar ist.

Wenn hingegen der Mitnehmer 4 in Förderrichtung F die Gegenhalterelemente 7 über eine Ananasfrucht A verfährt, um die Gegenhalterelemente 7 von der Geschlossenposition in die Offenposition zu verfahren, so verschwenkt auch das Anschlagelement 12; und zwar in dieselbe Richtung wie die Gegenhalterelemente 7 aufgrund des Verbindungselement 13s, das das Anschlagelement 12 mit der Hebelanordnung 9 verbindet.

Des Weiteren geht aus den Figuren 1 bis 4 hervor, dass die Einrichtung 6 zur Durchmesserbestimmung der Ananasfrucht A einen zweiten Sensor 14 zur Positionserfassung des Mitnehmers 4 umfasst.

Hierbei ist der zweite Sensor 14 ausgebildet, den Weg, den der Mitnehmer 4 des Antriebs 3 zurückgelegt, und somit die Position des Mitnehmers 4 zu erfassen. Im vorliegenden Fall ist der zweite Sensor 14 am bzw. im Antrieb 3 angeordnet.

Genauer ausgedrückt, ist der zweite Sensor 14 in der Lage, die relative Position des Mitnehmers 4 zu einer vorbestimmten Startposition zu erfassen.

Dabei ist die Einrichtung 6 zur Durchmesserbestimmung der Ananasfrucht A derart eingerichtet, dass sich der Mitnehmer 4 in der vorbestimmten Startposition befindet, wenn die Gegenhalterelemente 7 in der Geschlossenposition angeordnet sind.

Auch kann die Einrichtung 6 zur Durchmesserbestimmung der Ananasfrucht A die vorbestimmte Startposition des Mitnehmers 4 erkennen, und zwar dann, wenn der erste Sensor 8 die Geschlossenposition des Gegenhalterelements 7 detektiert.

Nochmals mit anderen Worten ausgedrückt, ist die Einrichtung 6 zur Durchmesserbestimmung der Ananasfrucht A derart eingerichtet, dass der Mitnehmer 4 in der vorbestimmten Startposition dann angeordnet ist, wenn der Mitnehmer 4 gegen das Anschlagelement 16 des Rückstellmechanismus 11 wirkt und die Gegenhalterelemente 7 von der Offenposition in die Geschlossenposition rückgestellt hat.

In dieser Position wird der als Kontaktschalter ausgebildete erste Sensor 8 nicht kontaktiert.

Ferner zeigen die Figuren 1 bis 4, dass die Einrichtung 6 zur Durchmesserbestimmung der Ananasfrucht A eine Bestimmungseinheit 15 zum Bestimmen des Durchmessers der Ananasfrucht A hat.

Hierbei ist die Bestimmungseinheit 15 mit dem ersten 8 und dem zweiten Sensor 14 verbunden, wobei die Bestimmungseinheit 15 eingerichtet ist, den in Förderrichtung F zurückgelegten Weg des Mitnehmers 4 ausgehend von der vorbestimmten Startposition zu erfassen.

Des Weiteren ist die Bestimmungseinheit 15 derart ausgebildet, dass diese die vorbestimmte Entfernung zwischen den Gegenhalterelementen 7 und der vorbestimmten Startposition des Mitnehmers 4 speichert.

So ist es der Bestimmungseinheit 15 möglich, aus dem Verfahrweg des Mitnehmers 4 in Förderrichtung F, der von dem zweiten Sensor 14 erfasst wird, und dem Zeitpunkt, der von dem ersten Sensor 8 erfasst wird und zu welchem die entgegen der Förderrichtung F wirkenden Kraft der kraftbeaufschlagten Gegenhalterelemente 7 vom Mitnehmer 4 übertroffen wird, den seit der Startposition zurückgelegten Weg des Mitnehmers 4 zu bestimmen.

Mit anderen Worten ausgedrückt, ist die Bestimmungseinheit 15 in der Lage, den zurückgelegten Weg des Mitnehmers 4 zum Zeitpunkt eines Kontaktsignals des ersten Sensors 8 zu bestimmen.

Ferner ist die Bestimmungseinheit 15 eingerichtet, aus dem zurückgelegten Weg des Mitnehmers 4 und dem Zeitpunkt, an dem der erste Sensor 8 die vorbestimmte Offenposition der Gegenhalterelemente 7 detektiert, die Wegdifferenz zwischen Gegenhalterelementen 7 und Mitnehmer 4 zu bestimmen.

Eben diese Wegdifferenz entspricht dem Durchmesser der Ananasfrucht A.

Dabei ist es günstig, wenn die Bestimmungseinheit 15 zudem die Wegdifferenz aus dem zurückgelegten Weg des Mitnehmers 4 und der Entfernung der Gegenhalterelemente 7 zur Startposition des Mitnehmers 4 in einem Speicher hinterlegt hat.

Auch geht aus den Figuren 1 bis 4 hervor, dass die Einrichtung 6 zur Durchmesserbestimmung der Ananasfrucht A eine Steuereinheit 16 zur Bewegungssteuerung des Antriebs 3 umfasst.

Durch Zusammenspiel von Steuereinheit 16 und Bestimmungseinheit 15 der Einrichtung 6 ist es nun möglich, den Antrieb 3 so anzusteuern, dass die Ananasfrucht A anhand des errechneten Durchmessers der Ananasfrucht A in der Schneideinrichtung 5 derart platziert werden kann, dass Verschnitt in Form von Schale und Strunk minimierbar und die Ausbeute an Fruchtfleisch maximierbar ist.

Denn erst die korrekte Platzierung der Ananasfrucht A in der Schneideinrichtung 5 führt zu einem optimalen Ergebnis und auch zum sicheren Entfernen von Schale und Strunk bzw. dem ungenießbaren Teil einer Ananasfrucht.

Des Weiteren ist es mithilfe der Steuereinheit 16 möglich, den Antrieb 3 zu deaktivieren, insbesondere sobald die Geschlossenposition der Gegenhalterelemente 7 vom ersten Sensor 8 detektiert wird, den Mitnehmer 4 entgegen der Fördererrichtung F oder aber auch wieder in Förderrichtung F zu verfahren.

Wie in den Figuren 1 bis 4 zu erkennen, hat die Schneideinrichtung 5 eine Trenneinheit 17 zum Trennen der Schale und des Strunks von genießbarem Fruchtfleisch der Ananasfrucht A.

Dabei ist die Trenneinheit 17 mittels zweier konzentrisch und kreisringförmig ausgebildeter Schneidelemente ausgestattet, sodass die Trenneinheit 17 in der Lage ist, ein hohlzylinderförmiges Zwischenprodukt aus genießbarem Fruchtfleisch einer Ananasfrucht A zu erstellen.

Nochmals anders geschildert, hat die Trenneinheit 17 ein hubbewegbares Schäl-Entkernmesser 18, das eingerichtet ist, den Strunk einer Ananasfrucht A zu entfernen sowie die Ananasfrucht A zu schälen und ein hohlzylinderförmiges Zwischenprodukt aus genießbarem Fruchtfleisch zu erstellen.

Zudem hat die Trenneinheit 18 einen elektrischen Hubantrieb 19, wie in Figur 1 zu erkennen, an dem das Schäl-Entkernmesser 18 angeordnet und mit dem das Schäl-Entkernmesser 18 hubbewegbar ist.

Der Hubantrieb 19 ermöglicht es, das Schäl-Entkernmesser 18 in eine Trennrichtung U und auch entgegen der Trennrichtung U zu bewegen, um genießbares Fruchtfleisch auszuschneiden bzw. danach freizugeben.

Wie bereits angedeutet, hat das Schäl-Entkernmesser 18 zwei konzentrisch angeordnete Schneidelemente, die auf bzw. an die Größe der Ananasfrucht angepasst sind.

Während sich die Trenneinheit 18 in Förderrichtung F gesehen hinter der Aufnahmeeinrichtung 2 befindet, ist nun in Förderrichtung F gesehen hinter der Trenneinheit 18 eine Portioniereinheit 20 zum verzehrfertigen Portionieren von genießbaren Fruchtfleisch angeordnet.

Die Portioniereinheit 20 der Schneideinrichtung 5 ist eingerichtet, ein hohlzylinderförmiges Zwischenprodukt, erstellt von der Trenneinheit 17, durch Schneiden zu portionieren.

Hierzu ist die Portioniereinheit 20 als eine Querschneideeinheit zum Schneiden von Scheiben und als eine Längsschneideeinheit zum Schneiden von Stangen und/oder Stücken ausgebildet. Da im vorliegenden Fall stets zuerst Scheiben geschnitten werden, können logischerweise nachfolgend mithilfe der Längsschneideeinheit aus den Scheiben nur Stücke geschnitten werden.

Es ist aber auch denkbar, die Querschneideeinheit der Portioniereinheit 20 derart auszubilden, dass diese nur bei Bedarf verfügbar ist. So ist es also möglich, auch nur Stangen mittels der Längsschneideeinheit zu produzieren.

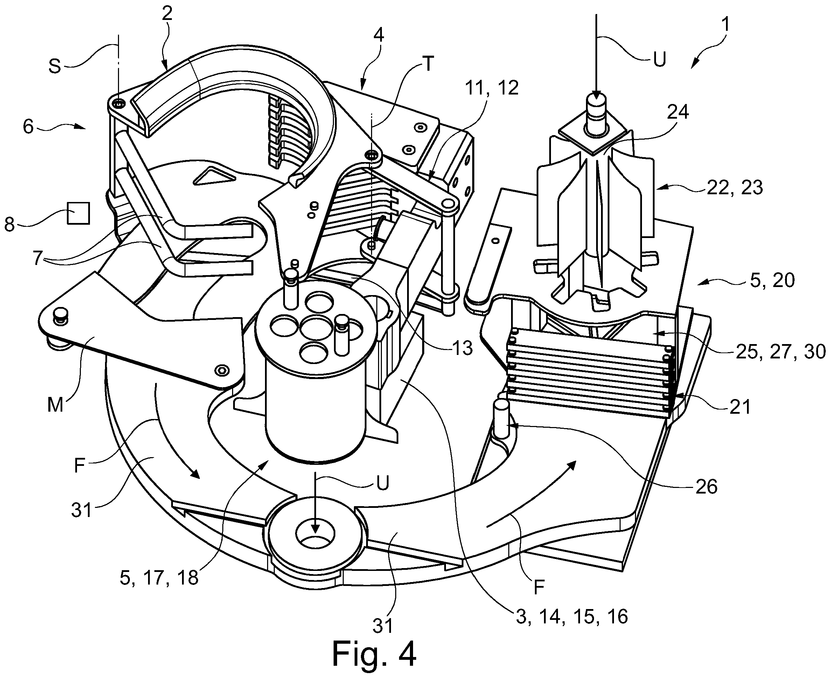

Wie bestens in Figur 4 zu erkennen, hat die Portioniereinheit 20 ein horizontales Messerpaket 21 zum Schneiden von Scheiben und ein vertikales Messerpaket 22 zum Schneiden von Stangen und/oder Stücken.

Die Querschneideeinheit besitzt dabei ein horizontales Messerpaket 21 mit diversen horizontal übereinander angeordneten Schneidmesserelementen, wobei die Schneidmesserelemente miteinander verbunden sind.

Im Gegensatz dazu ist die Längsschneideeinheit mit einem vertikalen Messerpaket 22 mit diversen nebeneinander angeordneten Schneidmesserelementen ausgestattet, die ebenfalls miteinander verbunden sind.

Des Weiteren zeigt insbesondere Figur 4, dass die Portioniereinheit 20 eine hubbewegbare Stempeleinheit 23 hat, wobei die Schneidmesserelemente der Längsschneideeinheit sternförmig mit der hubbewegbaren Stempeleinheit 23 verbunden sind.

Wie in Figur 2 gut zu erkennen, hat die hubbewegbare Stempeleinheit 23 ein Zylinderelement 24, an welchem das vertikale Messerpaket 22 befestigt ist.

Hierbei hat das Zylinderelement 24 einen Durchmesser, der an den Innendurchmesser eines hohlzylinderförmigen Zwischenprodukts, erstellt von der Trenneinheit 17, angepasst ist, sodass das Zylinderelement 24 in den Innendurchmesser des Zwischenprodukts versenkt werden kann.

Auch haben die sternförmig angeordneten Schneidmesserelemente in radialer Richtung, ausgehend von dem Zylinderelement 24, eine radiale Länge, die den Außendurchmesser eines hohlzylinderförmigen Zwischenprodukts, erstellt von der Trenneinheit 17, übertreffen. Somit ist ein sicheres Zerteilen des Zwischenprodukts gewährleistet.

Wie in Figur 1 gezeigt, ist die Portioniereinheit 20 mit dem elektrischen Hubantrieb 19 verbunden, wodurch die Längsschneideeinheit hubbewegbar ist, sodass diese von dem Hubantrieb 19 zum Schneiden in Trennrichtung U und entgegen der Trennrichtung U bewegbar ist.

Wie insbesondere den Figuren 1 bis 3 dargestellt, hat die Schneideinrichtung 5 unterhalb der Schneidmesserelemente der Längsschneideeinheit der Portioniereinheit 20 eine Schwenkbodeneinheit 25 zum Freigeben einer aufbereiteten und verzehrfertig portionierten Ananasfrucht A.

Hierbei umfasst die Schwenkbodeneinheit 25 ein Betätigungselement 26 (siehe Figur 2), ein Bodenelement 27 (siehe Figur 3), das eine Fallöffnung 28 (siehe Figur 1) freigibt oder verschließt, und ein Federelement 29 (siehe Figur 3), die alle miteinander wirkverbunden sind.

Das Bodenelement 27 ist dabei von dem Federelement 29 in eine erste Position, in der die Fallöffnung 28 freigegeben ist, vorgespannt.

Der Mitnehmer 4 zum Führen einer Ananasfrucht A wirkt nun ab einer bestimmten Position gegen das Betätigungselement 26, wodurch das Bodenelement 27 entgegen der Spannkraft des Federelements 29 in eine zweite Position, in der die Fallöffnung 28 verschlossen ist, bewegt wird.

In allen Figuren ist die zweite Position mit verschlossener Fallöffnung 28 dargestellt.

Wie insbesondere den Figuren 1 und 2 zu entnehmen, hat das Bodenelement 27 einen Schneidboden 30 mit Kerben, die an die Anordnung der Schneidelemente der Längsschneideeinheit angepasst sind. Dadurch wird gewährleistet, dass das hohlzylinderförmige Zwischenprodukt entlang seiner gesamten Höhe zerteilt wird, ohne dass die Schneidelemente der Längsschneideeinheit stumpf werden.

Abschließend sei noch erwähnt, dass die Schneideinrichtung 5 ausgebildet ist, mittels eines Top-Tail-Messers, von dem in den Figuren 1 bis 4 lediglich das untere Messer M dargestellt ist, die Enden der aufzubereitenden Ananasfrucht A in Form von endseitigen Kappen abzutrennen.

Auch ist es in allen Figuren zu erkennen, dass die Aufnahmeeinrichtung 2, die Schneideinrichtung 5 und die Einrichtung 6 zur Durchmesserbestimmung der Ananasfrucht A entlang einer Kreisbahn ausgerichtet bzw. angeordnet sind.

Ferner sind die Aufnahmeeinrichtung 2 und die Schneideinrichtung 5 und die Einrichtung 6 zur Durchmesserbestimmung der Ananasfrucht A entlang einer Fruchtauflage 31 angeordnet.

Hierbei ist die Fruchtauflage 31 derart ausgebildet, dass die Ananasfrucht A in Förderrichtung F gesehen nach der Einrichtung zur Durchmesserbestimmung 6 der Ananasfrucht A bis zum Ende der Schneideinrichtung 5 auf einer Ebene, insbesondere auf einer einzigen Ebene, bewegt wird.

Ferner sei noch erwähnt, dass die Vorrichtung 1 ein Gehäuse (nicht dargestellt) umfasst, das einem Konsumenten bzw. einem Käufer von Fruchtfleisch einer Ananasfrucht im stationären Handel das Einlegen und das Entnehmen der Ananasfrucht A erlaubt.

Jedoch ist dem Konsumenten bzw. dem Käufer ein weiterer Zugriff von außen mithilfe des Gehäuses nicht möglich, wodurch Verletzungen durch die automatisierte Vorrichtung 1 verhinderbar sind.

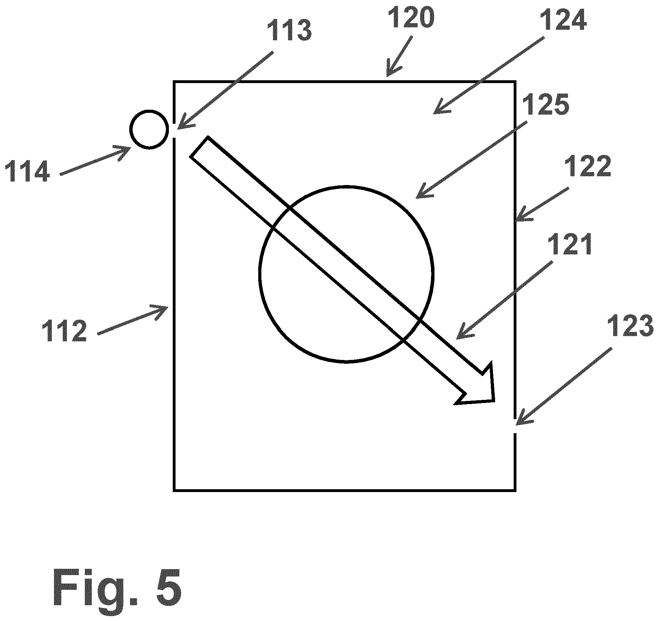

Mit Bezug zu Figur 5 wird eine schematische Ansicht des erfindungsgemäßen Systems im Querschnitt erläutert.

Das System umfasst ein Gehäuse 120 mit einer Rückwand 112 und einer Vorderseite 122. Das Gehäuse 120 umschließt einen Verarbeitungsraum 124, in dem eine Vorrichtung 125 zum Verarbeiten einer Ananas angeordnet ist.

Bei dem Ausführungsbeispiel ist die Vorrichtung 125 analog zu der oben erläuterten Vorrichtung 1 zum verzehrfertigen Aufbereiten einer Ananasfrucht A im stationären Handel ausgebildet.

In der Rückwand 112 ist in einem oberen Bereich ein Schlitz 113 ausgebildet, der horizontal verläuft und sich über mehr als 50 % der Breite der Rückwand 112 erstreckt.

An der Außenseite des Gehäuses 120 ist an der Rückwand 112 ein Ventilator 114 so befestigt, dass dieser Luft durch den Schlitz 113 in den Verarbeitungsraum 124 bläst.

Bei dem Ausführungsbeispiel entsteht ein Luftstrom 121, der den Bereich der Vorrichtung 125 durchströmt.

Der Luftstrom 121 verläuft hier zu einem weiteren Schlitz 123, der in einem unteren Bereich einer Vorderseite 123 des Gehäuses 120 angeordnet ist.

Der Luftstrom 121 weist bei dem Ausführungsbeispiel eine Stärke von zumindest 150 m³/h auf.

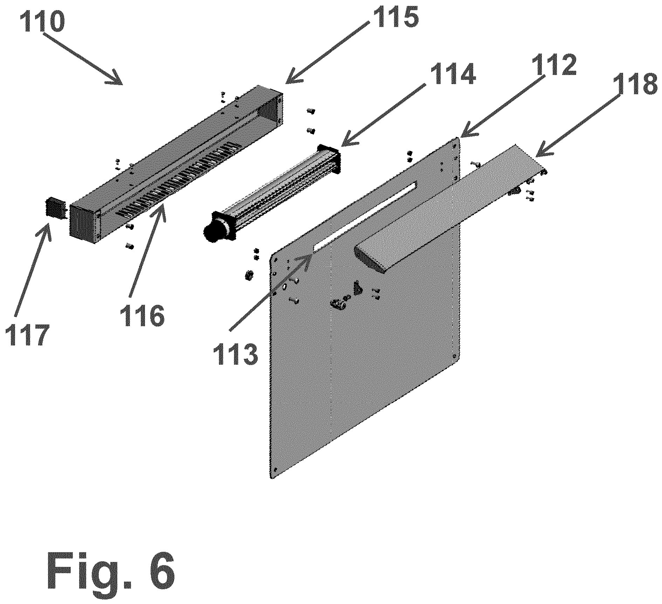

Mit Bezug zu Figur 6 wird eine Explosionszeichnung einer belüfteten Rückwand des Systems erläutert. Dabei sind vergleichbare Elemente des in Figur 5 gezeigten Systems mit den gleichen Bezugszeichen versehen und werden nicht erneut im Detail erläutert.

Die belüftete Rückwand 110 ist als integriertes Bauteil ausgebildet, das im Ganzen beim Zusammensetzen des Gehäuses 120 verwendet werden kann. Die Elemente sind dabei insbesondere mit Schrauben verbunden.

Die Rückwand 112 ist dabei als Blech ausgebildet, etwa aus Edelstahl. Es weist im oberen Bereich einen mittig angeordneten, horizontalen Schlitz113 auf, der sich über zumindest 60 % der Breite der Rückwand 112 erstreckt.

Auf einer Seite der Rückwand 112, die im zusammengebauten Zustand des Gehäuses 120 außen liegt, ist ein Ventilator 114 angebracht. Bei dem Beispiel wird ein Niedervolt-Querstromlüfter verwendet.

Der Ventilator wird von einer Schutzkappe 115 mit luftdurchlässigen Öffnungen 116 so überdeckt, dass ein Hineingreifen in den Ventilator 114 oder ein Eindringen größerer Fremdkörper in den Bereich des Ventilators 114 von außen vermieden wird.

Ferner ist ein Schalter 117 vorgesehen, der an der Schutzkappe 115 angebracht ist und mittels dessen der Ventilator 114 an- und ausgeschaltet werden kann.

Auf der gegenüberliegenden Seite der Rückwand 112, die im zusammengebauten Zustand des Gehäuses 120 innen liegt, ist ein horizontales Luftleitblech 118 angebracht. Dieses ist bei dem Beispiel um eine horizontale Achse schwenkbar gelagert. Das Luftleitblech 118 verläuft im Wesentlichen horizontal und ist oberhalb des Schlitzes 113 der Rückwand 112 angebracht, um die einströmende Luft nach unten abzulenken. Durch Einstellen eines geeigneten Winkels des Luftleitblechs 118 ist die Richtung des Luftstroms 121 für eine optimale Durchströmung des Verarbeitungsraums 124 des Systems einstellbar.

### Bezugszeichenliste

- 1: Vorrichtung
- 2: Aufnahmeeinrichtung
- 3: Antrieb
- 4: Mitnehmer
- 5: Schneideinrichtung
- 6: Einrichtung zur Durchmesserbestimmung der Ananasfrucht
- 7: Gegenhalterelement
- 8: erster Sensor
- 9: Hebelanordnung
- 10: Federkraftelement
- 11: Rückstellmechanismus
- 12: Anschlagelement
- 13: Verbindungselement
- 14: zweiter Sensor
- 15: Bestimmungseinheit zum Bestimmen des Durchmessers der Ananasfrucht
- 16: Steuereinheit
- 17: Trenneinheit
- 18: Schäl-Entkernmesser
- 19: Hubantrieb
- 20: Portioniereinheit
- 21: Messerpaket
- 22: Messerpaket
- 23: Stempeleinheit
- 24: Zylinderelement
- 25: Schwenkbodeneinheit
- 26: Betätigungselement
- 27: Bodenelement
- 28: Fallöffnung
- 29: Federelement
- 30: Schneidboden
- 31: Fruchtauflage
- 110: Belüftete Rückwand
- 112: Rückwand
- 113: Öffnung, Schlitz
- 114: Ventilator
- 115: Schutzhaube
- 116: Öffnungen
- 117: Schalter
- 118: Luftleitblech
- 120: Gehäuse
- 121: Luftstrom
- 122: Vorderseite
- 123: Öffnung, Schlitz
- 124: Verarbeitungsraum
- 125: Vorrichtung

- A: Ananasfrucht
- F: Förderrichtung
- M: Top-Tail-Messer
- S: Schwenkachse
- T: Drehachse
- U: Trennrichtung

## Patentansprüche

1. System zum verzehrfertigen Aufbereiten einer Ananasfrucht (A) im stationären Handel, umfassend
- ein Gehäuse, das einen Verarbeitungsraum begrenzt;
- eine Vorrichtung zum Verarbeiten der Ananasfrucht (A) in dem Verarbeitungsraum; und
- einen Ventilator zum Erzeugen eines Luftstroms in dem Verarbeitungsraum,
- wobei der Ventilator dazu eingerichtet ist, eine im Wesentlichen konstante Luftströmung über einen großen Bereich von zumindest 60 % des Verarbeitungsraums zu erzeugen;
- und
- wobei die Luftströmung die Vorrichtung zum Verarbeiten der Ananasfrucht umströmt.

2. System gemäß Anspruch 1,
- wobei das Gehäuse eine Gehäusewand aufweist;
- wobei vorzugsweise die Gehäusewand zumindest einen Lufteinlass aufweist;
- wobei der Lufteinlass vorzugsweise als längliche Öffnung, insbesondere als horizontaler Schlitz, ausgebildet ist;
- wobei sich der Lufteinlass über zumindest 50 % einer Länge des Gehäuses erstreckt;
- wobei vorzugsweise der Ventilator an dem Lufteinlass so angeordnet ist, dass der Luftstrom durch den Lufteinlass strömt.

3. System gemäß einem der vorhergehenden Ansprüche,
- wobei der Ventilator an einer Außenseite des Gehäuses oder in dem Verarbeitungsraum angeordnet ist;
- wobei vorzugsweise der Ventilator einen Querstromlüfter umfasst;
- wobei vorzugsweise der Ventilator einen Niedervolt-Lüfter umfasst.

4. System gemäß einem der vorhergehenden Ansprüche,
- wobei die Luftströmung zumindest 125 m³/h, weiter bevorzugt zumindest 150 m³/h, weiter bevorzugt zumindest 200 m³/h beträgt.

5. System gemäß einem der vorhergehenden Ansprüche,
- ferner umfassend zumindest ein Luftleitblech;
- wobei das Luftleitblech vorzugsweise horizontal einstellbar ist;
- wobei vorzugsweise der Luftstrom durch das Luftleitblech so gelenkt wird, dass der Luftstrom im Wesentlichen über eine gesamte Breite des Verarbeitungsraums strömt.

6. System gemäß einem der vorhergehenden Ansprüche,
- ferner umfassend zumindest ein vertikales Luftleitblech;
- wobei vorzugsweise das vertikale Luftleitblech einstellbar ausgebildet ist, insbesondere schwenkbar, etwa um eine vertikale Achse;
- wobei vorzugsweise durch Einstellen des vertikalen Luftleitblechs eine Breite des Luftstroms einstellbar ist.

7. System gemäß einem der vorhergehenden Ansprüche, wobei die Vorrichtung (1) zum verzehrfertigen Aufbereiten der Ananasfrucht (A) aufweist:
- eine Aufnahmeeinrichtung (2) zum Aufnehmen der Ananasfrucht (A) in der Vorrichtung (1),
- einen Antrieb (3) mit einem Mitnehmer (4) zum Bewegen der aufzubereitenden Ananasfrucht (A) in Förderrichtung (F) von der Aufnahmeeinrichtung (2) zu einer Schneideinrichtung (5), und
- eine Schneideinrichtung (5) zum Trennen der Schale und des Strunks von genießbarem Fruchtfleisch der Ananasfrucht (A),
**dadurch gekennzeichnet, dass**
- die Vorrichtung (1) eine Einrichtung (6) zur Durchmesserbestimmung der Ananasfrucht (A) umfasst, um in der Schneideinrichtung (5) Verschnitt in Form von Schale und Strunk zu minimieren und die Ausbeute an Fruchtfleisch zu erhöhen.

## Claims

1. A system for ready-to-eat preparation of a pineapple fruit (A) in stationary retail, comprising
- a housing delimiting a processing space;
- an apparatus for processing the pineapple fruit (A) in the processing space; and
- a fan for generating an airflow in the processing space,
- wherein the fan is configured to generate a substantially constant airflow over a large area of at least 60% of the processing space;
- and
- wherein the airflow flows around the apparatus for processing the pineapple fruit.

2. The system according to claim 1,
- wherein the housing has a housing wall;
- wherein preferably the housing wall has at least one air inlet;
- wherein the air inlet is preferably formed as an elongated opening, in particular as a horizontal slot;
- wherein the air inlet extends over at least 50% of a length of the housing;
- wherein preferably the fan is arranged at the air inlet in such manner that the airflow flows through the air inlet.

3. The system according to any one of the preceding claims,
- wherein the fan is arranged at an outside of the housing or in the processing space;
- wherein preferably the fan comprises a cross-flow blower;
- wherein preferably the fan comprises a low-voltage blower.

4. The system according to any one of the preceding claims,
- wherein the airflow is at least 125 m³/h, more preferably at least 150 m³/h, more preferably at least 200 m³/h.

5. The system according to any one of the preceding claims,
- further comprising at least one air baffle;
- wherein the air baffle is preferably horizontally adjustable;
- wherein preferably the airflow is directed by the air baffle in such a manner that the airflow flows substantially over an entire width of the processing space.

6. The system according to any one of the preceding claims,
- further comprising at least one vertical air baffle;
- wherein preferably the vertical air baffle is designed to be adjustable, in particular pivotable, for example about a vertical axis;
- wherein preferably a width of the airflow is adjustable by adjusting the vertical air baffle.

7. The system according to any one of the preceding claims, wherein the apparatus (1) for ready-to-eat preparation of the pineapple fruit (A) has:
- a receiving device (2) for receiving the pineapple fruit (A) in the apparatus (1),
- a drive (3) with a driver (4) for moving the pineapple fruit (A) to be prepared in the conveying direction (F) from the receiving device (2) to a cutting device (5), and
- a cutting device (5) for separating the skin and the stem from edible fruit pulp of the pineapple fruit (A),
**characterized in that**
- the apparatus (1) comprises a device (6) for determining the diameter of the pineapple fruit (A) in order to minimize waste in the form of skin and stem in the cutting device (5) and to increase the yield of fruit pulp.

## Revendications

1. Système de préparation d'un fruit d'ananas (A) prêt à être consommé dans le commerce traditionnel, comprenant :
- un carter qui délimite une chambre de traitement ;
- un dispositif de traitement de fruit d'ananas (A) dans la chambre de traitement ; et
- un ventilateur prévu pour produire un courant d'air dans la chambre de traitement ;
- dans lequel le ventilateur est conçu pour produire un flux d'air pour l'essentiel constant sur une grande surface d'au moins 60 % de la chambre de traitement ;
- et
- dans lequel le flux d'air englobe le dispositif de traitement du fruit d'ananas.

2. Système selon la revendication 1,
- dans lequel le carter comporte une paroi de carter ;
- dans lequel la paroi de carter comporte de préférence une admission d'air ;
- dans lequel l'admission d'air est de préférence réalisée sous la forme d'une ouverture oblongue, notamment d'une fente horizontale ;
- dans lequel l'admission d'air s'étend sur au moins 50 % d'une longueur du carter ;
- dans lequel le ventilateur est de préférence disposé au niveau de l'admission d'air de telle sorte que le courant circule à travers l'admission d'air.

3. Système selon l'une quelconque des revendications précédentes,
- dans lequel le ventilateur est disposé au niveau d'un côté extérieur du carter ou dans la chambre de traitement ;
- dans lequel le ventilateur comprend de préférence un ventilateur de courant transversal ;
- dans lequel le ventilateur comprend de préférence un ventilateur à basse tension.

4. Système selon l'une quelconque des revendications précédentes,
- dans lequel le flux d'air est d'au moins 125 m³/h, de façon davantage préférée d'au moins 150 m³/h, de façon davantage préférée d'au moins 200 m³/h.

5. Système selon l'une quelconque des revendications précédentes,
- comprenant en outre au moins une tôle conductrice d'air ;
- dans lequel la tôle conductrice d'air peut être réglée de préférence horizontalement ;
- dans lequel le courant d'air est de préférence orienté de telle sorte à travers la tôle conductrice d'air que le courant d'air circule pour l'essentiel sur la totalité de la largeur de la chambre de traitement.

6. Système selon l'une quelconque des revendications précédentes,
- comprenant en outre au moins une tôle conductrice d'air verticale ;
- dans lequel la tôle conductrice d'air verticale est de préférence réalisée de façon réglable, notamment de façon à pouvoir pivoter, notamment autour d'un axe vertical ;
- dans lequel une largeur du courant d'air est de préférence réglable par réglage de la tôle conductrice d'air verticale.

7. Système selon l'une quelconque des revendications précédentes, dans lequel le dispositif (1) de préparation de fruit d'ananas (A) prêt à être consommé comporte :
- un dispositif de réception (2) permettant de recevoir le fruit d'ananas (A) dans le dispositif (1) ;
- un entraînement (3) avec un élément d'entraînement (4) permettant de déplacer le fruit d'ananas (A) à préparer dans la direction de transport (F) depuis le dispositif de réception (2) jusqu'à un dispositif de tranchage (5) ; et
- un dispositif de tranchage (5) permettant de séparer la peau et le trognon de la chair comestible du fruit d'ananas (A) ;
**caractérisé en ce que :**
- le dispositif (1) comprend un dispositif (6) de détermination de diamètre du fruit d'ananas (A) afin de minimiser dans le dispositif de tranchage (5) la découpe de la peau et du trognon et d'accroître la quantité de chair comestible récoltée du fruit.
